# EUROPÄISCHE PATENTSCHRIFT

(11) **EP 3 782 451 B1**
(45) Veröffentlichungstag und Bekanntmachung des Hinweises auf die Patenterteilung: **04.10.2023**
(21) Anmeldenummer: 20000280.6
(22) Anmeldetag: 10.08.2020
(51) Int. Cl.: A01C 23/00

(54) **LANDWIRTSCHAFTLICHES GERÄT ZUR AUFBRINGUNG VON GÜLLE**
AGRICULTURAL DEVICE FOR APPLYING LIQUID MANURE
APPAREIL AGRICOLE DESTINÉ À L'ÉPANDAGE DU FUMIER

(30) Priorität: 21.08.2019 DE 202019003488 U
(43) Veröffentlichungstag der Anmeldung: 24.02.2021
(73) Patentinhaber: Zunhammer, Sebastian, 83301 Traunreut (DE)
(72) Erfinder: Zunhammer, Sebastian, 83301 Traunreut (DE)
(74) Vertreter: Einsiedler, Johannes

(56) Entgegenhaltungen:
- DE-A1- 1 655 228
- DE-A1- 19 709 249
- FR-A1- 2 525 426
- US-A- 3 489 320

## Beschreibung

Die Erfindung betrifft ein landwirtschaftliches Gerät zur Ausbringung von Gülle, insbesondere Pumpfass, mit einer Aufnahmevorrichtung und einer mit der Aufnahmevorrichtung lösbar verbundenen Güllepumpe, die in einer Betriebsstellung in Fahrtrichtung des Zugfahrzeugs bzw. des Pumpfasses verbaut ist.

Bei einem Güllefass handelt es sich um ein landwirtschaftliches Gerät zur Ausbringung von Gülle bzw. Jauche auf Feldern oder Grünland.

Güllefässer verfügen vielfach über ein eigenes Anhängerfahrwerk; es gibt aber auch Geräte zum Aufbau auf ein Trägerfahrzeug. Wenn das Güllefass als Anhänger konstruiert ist, muss es von einem Traktor gezogen werden. Neben dem Fass weist ein landwirtschaftliches Gerät zur Ausbringung von Gülle einen Gülleverteiler auf, der bsp. an dem Anhängerfahrwerk angebracht ist, welcher auch das Güllefass aufweist. Mittels des Gülleverteilers kann in dem Fass vorgehaltene Gülle beispielsweise auf einem Feld verteilt werden.

Die Befüllung der Güllefässer erfolgt entweder mit Hilfe von Vakuum, indem das Fass unter Unterdruck gesetzt wird, und so die Gülle aus, bsp. einer Grube in das Vakuum strömt, oder unmittelbar aus der Grube oder Tankwagen mit Hilfe einer Güllepumpe, bsp. einer Exzenterschneckenpumpe, die die Gülle in das Fass pumpt.

Vakuum-Tankwagen sind bsp. aus der FR 2 525 426 A1, US 3 489 320 A oder der DE 197 09 249 A1 bekannt. Aus der DE 1 655 228 A1 ist eine fahrbare Förderanlage bestehend aus einer Zugmaschine bzw. einem Schlepper und einem Transportbehälter, vorzugsweise einem Fass, sowie einer Exzenterschneckenpumpe mit umkehrbarer Förderrichtung bekannt. Durch einen schwenkbaren Anbau des Pumpenaggregats wird angestrebt, eine Antriebswelle als Verlängerung des Pumpen-Rotor-Antriebs in die Grube einzuführen und Einrichtungen zum Rühren, Zerkleinern oder Homogenisieren des Grubeninhalts zugleich mit dem Saugvorgang oder auch unabhängig davon, betreiben zu können.

Des Weiteren ist eine Kombination einer Vakuumpumpe mit einer nicht ansaugenden Kreiselpumpe bekannt. Die nicht ansaugende Kreiselpumpe kann problemlos Feststoffe transportieren ohne beschädigt zu werden. Da die Kreiselpumpe aufgrund ihres großen Freiraumes nicht selbstansaugend ist, wird die Ansaugung durch einen Vakuumkompressor erreicht. Durch das Vakuum wird die Pumpe mit Gülle gefüllt, worauf diese dann die Gülle fördert. Hierbei ist es üblich, die Kreiselpumpe hydraulisch anzutreiben, wobei beispielsweise die Antriebswelle des Traktors benutzt wird. Ein Nachteil dabei ist die hohe Ölleistung und der geringe Wirkungsgrad, der durch die weite Entfernung von Antriebsquelle und Pumpe bedingt ist. Gleichzeitig wird durch einen solchen Aufbau ein verhältnismäßig kleiner Druck von circa nur einem halben Bar erzeugt.

Güllepumpen sind in der Regel rotierende oder oszillierende Verdrängerpumpen, insbesondere Drehkolben- oder Exzenterschneckenpumpen, und werden über die Zapfwelle des Zug- bzw. Trägerfahrzeugs angetrieben.

Bei landwirtschaftlichen Geräten zur Ausbringung von Gülle mit festverbauten oben genannten Güllepumpen - nachfolgend als Pumpfass bezeichnet - wird die Gülle aus der Güllegrube angesaugt und in das Fass gepumpt. Zum Ausbringen wird dann mittels Dreiwegehähnen oder Schiebern die Gülle aus dem Fass über die Güllepumpe zum Gülleverteiler und schließlich auf die landwirtschaftlichen Nutzflächen geleitet. Eine Änderung der Drehrichtung der Pumpe wird nicht durchgeführt und die Ansaug- bzw. Druckseite der Pumpe bleibt gleich. Durch umschalten von Schiebern kann die Fließrichtung der Gülle umgestellt werden von in Richtung Verteiler auf in Richtung Tank, insb. um den Tank umrühren zu können.

Gattungsgemäße Güllepumpen verfügen in der Regel über ein zweit- oder mehrteiliges Pumpengehäuse. Um die Pumpe vor Fremdkörpern zu schützen werden häufig Steinfangkästen oder Schneidwerke eingesetzt.

In einem ersten Teil des Pumpengehäuses ist die Pumpenantriebseinrichtung angeordnet. Der Gehäusestutzen des ersten Teils verfügt über zumindest einen Wellenzapfen zum Anschluss einer Gelenkwelle, die mit der Zapfwelle des Zugs- bzw. Trägerfahrzeugs verbindbar ist.

In einem in axialer bzw. achsparalleler Richtung zu dem Wellenzapfen und hinter dem ersten Gehäuseteil angeordneten, zweiten Teil des Pumpengehäuses befindet sich das Sauggehäuse, dass in der Regel den Rotor aufnimmt. Das üblicherweise zylinderförmige Sauggehäuse ist rückseitig, über einen, beispielsweise verschraubten Abschlussdeckel zugänglich. Gegebenenfalls kann zwischen dem ersten und zweiten Teil des Pumpengehäuses ein sogenanntes Verbindungsgehäuse angeordnet sein. Das Sauggehäuse weist neben dem Abschlussdeckel zudem lateral angeordnete Öffnungen zum Anschluss für die Druck- und Saugleitung auf.

Die Güllepumpe kann entweder in Fahrtrichtung des Zugfahrzeugs bzw. des Pumpfasses verbaut sein, d.h. der bzw. die Wellenzapfen liegen axial und die Anschlüsse für die Druckund Saugleitung liegen lateral zum Zugfahrzeug. Die Güllepumpe kann aber auch quer zur Fahrtrichtung des Zugfahrzeugs bzw. Pumpfasses verbaut sein, d.h. der bzw. die Wellenzapfen liegen lateral und die Anschlüsse für die Druck- und Saugleitung liegen axial zum Zugfahrzeug.

Nachteilig an der erstgenannten Variante ist, dass sich das Sauggehäuse konstruktionsbedingt unmittelbar vor oder unterhalb des Pumpfasses befindet, und damit, insbesondere auch aufgrund der konstruktiven Begebenheiten, schwer zugänglich ist. So ist weder der rückseitig angeordnete Abschlussdeckel des Sauggehäuses noch die über diesen Deckel erreichbaren, wartungsintensiven Förderelemente der Pumpe durch ein einfaches Öffnen des Gehäuses frei zugänglich.

Dies bedingt, dass, insbesondere für Wartungsarbeiten, die gesamte Pumpe von dem landwirtschaftlichen Gerät demontiert und in Alleinstellung gewartet werden muss. Im Unterschied zu Vakuum-Güllewagen kommt nämlich eine Güllepumpe mit dem zu fördernde Medium, also der Gülle, in Berührung, so dass in der Regel ein höherer Verschleiß auftritt. Demnach kommen der Wartung und Instandsetzung gattungsgemäßer Pumpen in der Praxis besondere Bedeutung zu, zumal verschiedene Teile einem gegebenenfalls erheblichen Verschleiß unterliegen und daher als Verschleißteile regelmäßig ausgetauscht werden müssen.

Diesen Nachteil vermeidet die zweitgenannte Variante zum Verbau von Güllepumpen auf Zugfahrzeugen oder Anhängerfahrwerken, da dabei das Sauggehäuse resp. der Abschlussdeckel, der für die Wartungsarbeiten zu entfernen ist, gut von der Seite her zugänglich ist. Gleichwohl ist bei dieser Variante aufgrund der Anordnung der Pumpe zu deren Antrieb über die Zapfwelle des Zug- bzw. Trägerfahrzeugs ein Winkelgetriebe vorzusehen. Zudem müssen, wiederum aufgrund der Anordnung der Pumpe, zusätzliche Leitungsbögen für die Druck- und Saugleitung verbaut werden. Dies bedingt, ein höheres Gewicht für das Pumpfass und zusätzliche Kosten für Winkelgetriebe und Leitungsbögen.

Aufgabe der vorliegenden Erfindung ist es die Nachteile des Standes der Technik zu vermeiden, und ein landwirtschaftliches Gerät zur Ausbringung von Gülle das sich durch einen einfachen Aufbau und optimierte Wartungs- und Instandhaltungsmöglichkeiten auszeichnet.

Diese Aufgabe wird durch Anspruch 1 gelöst

Die Erfindung vermeidet dadurch die im Stand der Technik genannten Nachteile und verfolgt so vielmehr das Prinzip, die Vorteile der beiden oben genannten Möglichkeiten zur Anordnung gattungsgemäßer Güllepumpen zu vereinen. Sie geht von der Erkenntnis aus, dass sich die Wartung- und Instandhaltungsmöglichkeiten einer an einem landwirtschaftlichen Gerät festverbauten Güllepumpe optimieren lassen, wenn eine freie Zugänglichkeit zu einem Abschlussdeckel des Sauggehäuses und damit zu den wartungsintensiven Förderelementen der Pumpe gegeben ist.

Erfindungsgemäß ist die Güllepumpe in Fahrtrichtung des Zugfahrzeugs bzw. des Pumpfasses verbaut, so dass die Wellenzapfen axial und die Anschlüsse für eine Druck- und Saugleitung lateral zum Zugfahrzeug liegen, was der Betriebsstellung entspricht. Damit kann auf zusätzliche Bauteile, insbesondere auf ein Winkelgetriebe und zusätzliche Leitungsbögen verzichtet werden.

Die Güllepumpe ist dabei an einer, an dem Anhängerfahrwerk oder dem Trägerfahrzeug angeordnete Aufnahmevorrichtung lösbar angeordnet. Die erfindungsgemäße Aufnahmevorrichtung ist vorzugsweise, insbesondere wenn es sich um ein GFK Fass handelt, am Fahrwerk angeordnet. Bei Stahlfässern kann die Aufnahmevorrichtung auch direkt mit dem Fass, oder an oder in der Deichsel verbaut sein.

Über eine zwischen der Aufnahmevorrichtung und der Güllepumpe angeordneten vertikalen Drehachse kann die Pumpe aus der Betriebsstellung in eine Wartungsstellung geschwenkt werden. In der genannten Wartungsstellung ist der für Wartungsarbeiten zu entfernende Abschlussdeckel des Sauggehäuses in einer bevorzugten Arbeitshöhe, insbesondere zwischen 30 cm und 100 cm frei zugänglich, um Wartung- und/oder Instandhaltungsmaßnahmen durchzuführen.

Erfindungsgemäß ist die Pumpe unterhalb der Aufnahmevorrichtung angeordnet, um ein einfaches Verschwenken, insbesondere ohne weitere Hilfsmittel, wie beispielsweise ein Drehlager, zu gewährleisten.

Erfindungsgemäß ist die Güllepumpe unterhalb der Aufnahmevorrichtung angeordnet, und mit dieser lösbar, insbesondere über Schraubverbindungen verbunden. Die erfindungsgemäße Drehachse kann durch ein drehbar starres Verbindungselement zwischen der Aufnahmevorrichtung und der Pumpe gebildet sein. Demnach kann das Verbindungselement bsp. ein Bolzen sein, dergestalt, dass nach dem Lösen und Entfernen der Schraubverbindungen die Pumpe um die von dem Bolzen gebildete vertikale Drehachse verschwenkt werden kann.

In einer einfachen Ausführungsform handelt es sich bei dem Verbindungselement, das die Drehachse bildet, um eine vorzugsweise zentral über dem ersten Teil des Pumpengehäuses angeordnete und mit diesem verbundenen Herzschraube, die an der Aufnahmevorrichtung anliegt, und zum Verschwenken lediglich gelöst jedoch nicht entfernt wird.

Ein Verfahren zur Wartung eines landwirtschaftlichen Geräts zur Ausbringung von Gülle, insbesondere Pumpfass, nach einem der Ansprüche 1 bis 8, umfasst, dass, die Haltemittel auf der Sau- und Druckseite gelöst werden, eine druckseitige Leitung entfernt wird, die lösbaren Verbindungsmittel zwischen der Aufnahmevorrichtung und der Pumpe gelöst und entfernt werden, und schließlich die Pumpe über die Drehachse um ca. 90° in die Wartungsstellung geschwenkt wird. Die vorstehend genannten Verfahrensschritte können dabei mit Ausnahme des Verschwenkens der Pumpe in beliebiger Reihenfolge durchgeführt werden. Vorzugsweise wird die Pumpe mithilfe eines Hilfsmittels, beispielsweise einen Pumpendrehschlüssel, der auf einen Wellenzapfen aufgesetzt wird, verschwenkt. Durch die mithilfe des Pumpendrehschlüssels erzeugte Hebelwirkung lässt sich die Pumpe einfach von Hand aus der Betriebs- in die Wartungsstellung verschwenken. In der Wartungsstellung ist das Sauggehäuse, und der Abschlussdeckel, frei zugänglich, um die Wartung- und Instandhaltungsarbeiten durchzuführen.

Das Prinzip der Erfindung wird im Folgenden anhand von Zeichnungen beispielhalber noch näher erläutert. In den Zeichnungen zeigen:
- Figur 1:: eine perspektivische Draufsicht auf den vorderen Teil eines Pumpfasses mit einer Güllepumpe in Betriebsstellung und
- Figur 2:: eine perspektivische Draufsicht den vorderen Teil eines Pumpfasses mit einer Güllepumpe in Wartungsstellung.

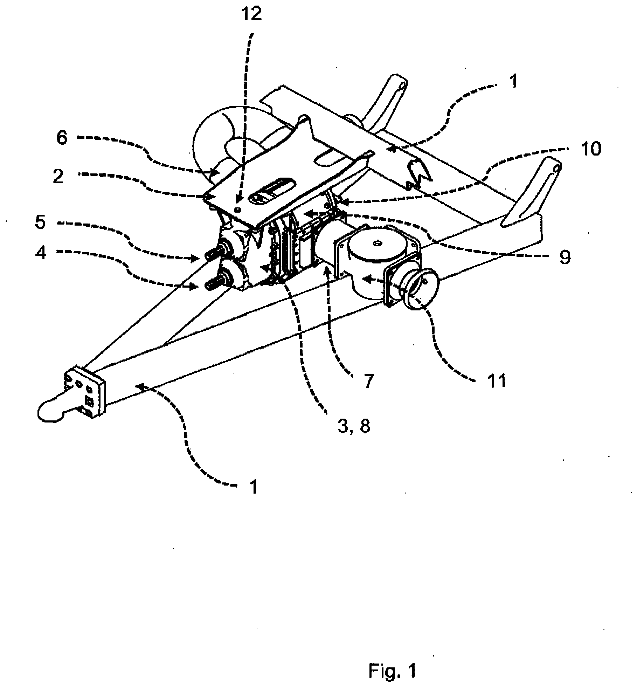

Figur 1 zeigt eine perspektivische Draufsicht auf den vorderen Teil eines Anhängerfahrwerks (1) für ein Pumpfass (zur Vereinfachung ist das Fass selbst nicht gezeigt). Das Anhängerfahrwerk (1) weist eine Aufnahmevorrichtung (2) in Form einer Tragplatte auf. Die Aufnahmevorrichtung (2) ist integraler Bestandteil des Fahrwerks (1). Die Güllepumpe (3) ist unterhalb der Aufnahmevorrichtung (2) angeordnet, und mit dieser über Schraubverbindungen (nicht gezeigt) lösbar verbunden.

Die in Figur 1 gezeigte Güllepumpe (3) befindet sich in einer Betriebsstellung, und ist dabei in Fahrtrichtung des Zugfahrzeugs bzw. des Pumpfasses angeordnet, d.h. die übereinander angeordneten Wellenzapfen (4) und (5) liegen axial und die Anschlüsse für die Druckleitung (6) und Saugleitung (7) liegen lateral zum Zugfahrzeug.

Das zweiteilige Pumpengehäuse der Güllepumpe (3) weist einen ersten Teil (8) auf, indem die Pumpenantriebseinrichtung angeordnet ist. Der Gehäusestutzen des ersten Teils (8) verfügt über zwei Wellenzapfen (4, 5) zum Anschluss einer Gelenkwelle, die mit der Zapfwelle des Zug- bzw. Trägerfahrzeugs verbindbar ist. In dem in axialer bzw. achsparalleler Richtung zu den Wellenzapfen (4, 5) und hinter dem ersten Gehäuseteil (8) angeordneten, zweiten Teil des Pumpengehäuses der Güllepumpe 3 befindet sich das Sauggehäuse (9), mit den Anschlüssen für die Druck- (6) und Saugleitung (7), sowie dem rückseitig angeordneten Abschlussdeckel (10).

Die Druckleitung (6) führt die Gülle zum Gülleverteiler; die Saugleitung (7) führt die Gülle, geregelt über den Schieber (11) entweder aus der Güllegrube oder aus dem Pumpfass zur Güllepumpe. Über eine Drehachse (12), die von einer Herzschraube gebildet wird, ist die Pumpe (3 aus der Betriebsstellung in die Wartungsstellung verschwenkbar.

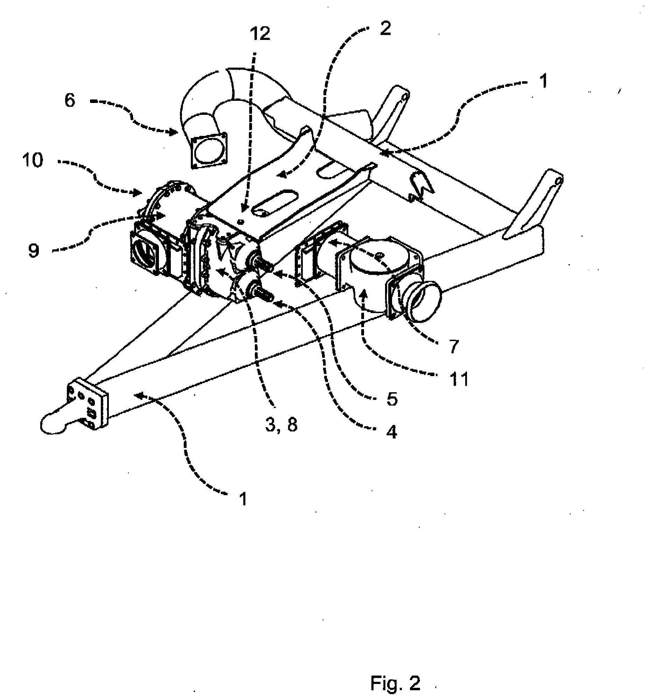

Figur 2 zeigt eine perspektivische Draufsicht auf den vorderen Teil eines Anhängerfahrwerks (1) für ein Pumpfass. Auch hier wird zur Vereinfachung das Fass selbst nicht gezeigt. Im Gegensatz zur Figur 1 befindet sich die Güllepumpe (3) in der Wartungsstellung, und ist dabei um etwa 90° gegenüber der Betriebsstellung nach Figur 1 verschwenkt.

Um die Pumpe (3 aus der Betriebsstellung in die Wartungsstellung über die Drehachse (12) verschwenken zu können müssen zunächst die zwischen Sauggehäuse (9 und den Anschlüssen für die Druck- (6) und Saugleitung (7) vorgesehenen Haltemittel, insbesondere Schrauben, gelöst und die Druckleitung (6) abgebaut werden. Dann sind die Schraubverbindungen zwischen der Aufnahmevorrichtung (2) und der Güllepumpe (3) zu lösen und die Schrauben zu entfernen.

Die, vorzugsweise zwischen der Güllepumpe (3) und der Aufnahmevorrichtung (2) zentral angeordnete Herzschraube (9 ist lediglich zu lösen. Schließlich kann die Pumpe (3) gegebenenfalls mit einem Hilfsmittel, wie beispielsweise einem Pumpendrehschlüssel (nicht in der Figur gezeigt) um 90° verschwenkt werden. In dieser Wartungsposition ist der rückseitig am Sauggehäuse (9) vorgesehene Abschlussdeckel (11) für die Wartung- und Instandhaltungsarbeiten frei zugänglich.

Nach den Wartung-bzw. Instandhaltungsarbeiten kann die Güllepumpe (3) wieder in die Betriebsposition verschwenkt werden, und, nachdem die Druck- (6) und Saugleitung (7) angeschlossen und die Pumpe wieder über Schraubverbindung gesichert wurde, in Betrieb genommen werden.

Sauggehäuse (9), mit den Anschlüssen für die Druck- (6) und Saugleitung (7), sowie dem rückseitig angeordneten Abschlussdeckel (10).

Die Druckleitung (6) führt die Gülle zum Gülleverteiler; die Saugleitung (7) führt die Gülle, geregelt über den Schieber (11) entweder aus der Güllegrube oder aus dem Pumpfass zur Güllepumpe. Über eine Drehachse (12), die von einer Herzschraube gebildet wird, ist die Pumpe (3) aus der Betriebsstellung in die Wartungsstellung verschwenkbar.

Figur 2 zeigt eine perspektivische Draufsicht auf den vorderen Teil eines Anhängerfahrwerks (1) für ein Pumpfass. Auch hier wird zur Vereinfachung das Fass selbst nicht gezeigt. Im Gegensatz zur Figur 1 befindet sich die Güllepumpe (3) in der Wartungsstellung, und ist dabei um etwa 90° gegenüber der Betriebsstellung nach Figur 1 verschwenkt.

Um die Pumpe (3 aus der Betriebsstellung in die Wartungsstellung über die Drehachse (12) verschwenken zu können müssen zunächst die zwischen Sauggehäuse (9 und den Anschlüssen für die Druck- (6) und Saugleitung (7) vorgesehenen Haltemittel, insbesondere Schrauben, gelöst und die Druckleitung (6) abgebaut werden. Dann sind die Schraubverbindungen zwischen der Aufnahmevorrichtung (2) und der Güllepumpe (3) zu lösen und die Schrauben zu entfernen.

Die, vorzugsweise zwischen der Güllepumpe (3) und der Aufnahmevorrichtung (2) zentral angeordnete Herzschraube (9) ist lediglich zu lösen. Schließlich kann die Pumpe (3) gegebenenfalls mit einem Hilfsmittel, wie beispielsweise einem Pumpendrehschlüssel (nicht in der Figur gezeigt) um 90° verschwenkt werden. In dieser Wartungsposition ist der rückseitig am Sauggehäuse (9) vorgesehene Abschlussdeckel (11) für die Wartung- und Instandhaltungsarbeiten frei zugänglich.

Nach den Wartung-bzw. Instandhaltungsarbeiten kann die Güllepumpe (3) wieder in die Betriebsposition verschwenkt werden, und, nachdem die Druck- (6) und Saugleitung (7) angeschlossen und die Pumpe wieder über Schraubverbindung gesichert wurde, in Betrieb genommen werden.

### Bezugszeichenliste

- 1: Anhängerfahrwerk
- 2: Aufnahmevorrichtung
- 3: Güllepumpe
- 4: Wellenzapfen
- 5: Wellenzapfen
- 6: Druckleitung
- 7: Saugleitung
- 8: erster Teil des Pumpengehäuses
- 9: Sauggehäuse
- 10: Abschlussdeckel
- 11: Schieber
- 12: Drehachse

## Patentansprüche

1. Landwirtschaftliches Gerät zur Ausbringung von Gülle, insbesondere ein Pumpfass, mit einer Aufnahmevorrichtung (2) und einer unterhalb der Aufnahmevorrichtung (2) angeordneten und mit dieser lösbar verbundenen Güllepumpe (3), die in einer Betriebsstellung in Fahrtrichtung eines Zugfahrzeugs, inbesondere eines Pumpfasses, verbaut ist, so dass übereinander angeordnete Wellenzapfen (4, 5) der Güllepumpe axial und die Anschlüsse für eine Druck- und Saugleitung (6, 7) lateral zum Zugfahrzeug liegen, **dadurch gekennzeichnet, dass** durch eine zwischen Aufnahmevorrichtung (2) und Güllepumpe (3) angeordnete Drehachse (12) die Pumpe (3) aus der Betriebsstellung in eine Wartungsstellung, in der ein Sauggehäuse (9) und ein Abschlussdeckel (10) der Güllepumpe (3) frei zugänglich sind, um Wartung- und Instandhaltungsarbeiten durchzuführen, verschwenkbar ist.

2. Landwirtschaftliches Gerät nach Anspruch 1, **dadurch gekennzeichnet, dass** die Güllepumpe (3) über eine vertikale Drehachse (12) um etwa 90° verschwenkbar ist.

3. Landwirtschaftliches Gerät nach einem der vorstehenden Ansprüche, **dadurch gekennzeichnet, dass** die Aufnahmevorrichtung (3) unmittelbar am Anhängerfahrwerk (1) oder Trägerfahrwerk angeordnet ist.

4. Landwirtschaftliches Gerät nach einem der vorstehenden Ansprüche, **dadurch gekennzeichnet, dass** die Güllepumpe (3) über Schraubverbindungen mit der Aufnahmevorrichtung (2) verbunden ist, und die Drehachse (12) von einer, vorzugsweise zentral über dem ersten Teil des Pumpengehäuses (8) angeordneten Herzschraube gebildet wird.

5. Landwirtschaftliches Gerät nach einem der vorstehenden Ansprüche, **gekennzeichnet durch** eine an einem Wellenzapfen (4, 5) anbringbare Hilfsvorrichtung zum Verschwenken der Pumpe (3).

6. Landwirtschaftliches Gerät nach einem der vorstehenden Ansprüche, **gekennzeichnet durch** einen Steinfangkasten oder einem Schneidwerk zum Schutz der Güllepumpe vor Fremdkörpern.

7. Landwirtschaftliches Gerät nach einem der vorstehenden Ansprüche, **dadurch gekennzeichnet, dass** in der Wartungsstellung ein für Wartungsarbeiten zu entfernender Abschlussdeckel (10) der Pumpe (3) in einer bevorzugten Arbeitshöhe frei zugänglich ist.

## Claims

1. Agricultural appliance for applying liquid manure, in particular a pump tanker, having a receiving device (2) and a liquid manure pump (3) which is arranged below the receiving device (2) and which is connected releasably thereto and which is installed in an operating position in the direction of travel of a tractor vehicle, in particular a pump tanker, such that shaft journals (4, 5), which are arranged one above the other, of the liquid manure pump lie axially, and the connections for a pressure and suction line (6, 7) lie laterally, with respect to the tractor vehicle, **characterized in that**, by means of an axis of rotation (12) arranged between the receiving device (2) and liquid manure pump (3), the pump (3) is pivotable from the operating position into a maintenance position, in which a suction housing (9) and a closure cover (10) of the liquid manure pump (3) are freely accessible, in order to carry out maintenance and servicing work.

2. Agricultural appliance according to Claim 1, **characterized in that** the liquid manure pump (3) is pivotable about approximately 90° via a vertical axis of rotation (12).

3. Agricultural appliance according to either of the preceding claims, **characterized in that** the receiving device (3) is arranged directly on the trailer chassis (1) or carrier chassis.

4. Agricultural appliance according to one of the preceding claims, **characterized in that** the liquid manure pump (3) is connected to the receiving device (2) via screw connections, and the axis of rotation (12) is formed by a heart screw which is preferably arranged centrally over the first part of the pump housing (8).

5. Agricultural appliance according to one of the preceding claims, **characterized by** an auxiliary device, which can be attached to a shaft journal (4, 5), for pivoting the pump (3).

6. Agricultural appliance according to one of the preceding claims, **characterized by** a stone-catching box or a cutting mechanism for protecting the liquid manure pump against foreign bodies.

7. Agricultural appliance according to one of the preceding claims, **characterized in that**, in the maintenance position, a closure cover (10) of the pump (3), which closure cover can be removed for maintenance work, is freely accessible at a preferred working height.

## Revendications

1. Equipement agricole destiné à l'épandage du lisier, en particulier une citerne à pompe, comprenant un dispositif de réception (2) et une pompe à lisier (3) disposée au-dessous du dispositif de réception (2) et reliée de manière amovible à celui-ci, qui est installé dans une position de service dans le sens de la marche d'un véhicule tracteur, en particulier d'une citerne à pompe, de sorte que des tourillons de l'arbre (4, 5) de la pompe à lisier sont disposés les uns au-dessus des autres, sont situés axialement et les raccords pour une conduite de refoulement et une conduite d'aspiration (6, 7) sont situés latéralement par rapport au véhicule tracteur,
**caractérisé en ce qu'**un pivot (12) disposé entre le dispositif de réception (2) et la pompe à lisier (3) permet de faire pivoter la pompe (3) de la position de service dans une position de maintenance dans laquelle un carter d'aspiration (9) et un couvercle d'extrémité (10) de la pompe à lisier (3) sont librement accessibles pour l'exécution d'interventions de maintenance et d'entretien.

2. Equipement agricole selon la revendication 1, **caractérisé en ce que** la pompe à lisier (3) peut pivoter d'environ 90° par l'intermédiaire d'un pivot vertical (12).

3. Equipement agricole selon l'une quelconque des revendications précédentes, **caractérisé en ce que** le dispositif de réception (3) est disposé directement au niveau du mécanisme de roulement de remorque (1) ou du mécanisme de roulement de support.

4. Equipement agricole selon l'une quelconque des revendications précédentes, **caractérisé en ce que** la pompe à lisier (3) est reliée par des assemblages vissés au dispositif de réception (2), et le pivot (12) est formé par une vis à coeur disposée de préférence de manière centrale au-dessus de la première partie du carter de pompe (8).

5. Equipement agricole selon l'une quelconque des revendications précédentes, **caractérisé par** un dispositif auxiliaire pouvant être fixé à un tourillon de l'arbre (4, 5) et servant à faire pivoter la pompe (3) .

6. Equipement agricole selon l'une quelconque des revendications précédentes, **caractérisé par** un caisson d'épierrage ou une barre de coupe pour protéger la pompe à lisier des corps étrangers.

7. Equipement agricole selon l'une quelconque des revendications précédentes, **caractérisé en ce que** dans la position de maintenance, un couvercle d'extrémité (10) de la pompe (3), à retirer pour des interventions de maintenance, est librement accessible à une hauteur de travail préférée.
